# EUROPÄISCHE PATENTANMELDUNG

(11) **EP 3 306 080 A1**
(43) Veröffentlichungstag der Anmeldung: **11.04.2018**
(21) Anmeldenummer: 16193110.0
(22) Anmeldetag: 10.10.2016
(51) Int. Cl.: F03D 17/00

(54) **VERFAHREN UND VORRICHTUNG ZUM OPTISCHE UND NICHT OPTISCHE BILDGEBENDEN BESTIMMEN EINER WINDKRAFTANLAGE**

(71) Anmelder: Composcan GmbH, 14469 Potsdam (DE); Stuhl, Klaus, 67294 Mauchenheim (DE); KMN Koopman helicopter GmbH, 25358 Sommerland (DE)
(72) Erfinder: AUSTEN, Jürgen, 14469 Potsdam (DE); STUHL, Klaus, 67294 Mauchenheim (DE); KOOPMANN, Torben, 25358 Sommerland (DE)
(74) Vertreter: Bittner, Thomas L.

(57) **Zusammenfassung**

Die Offenbarung betrifft ein Verfahren zum bildgebenden Bestimmen einer Windkraftantage, wobei das Verfahren die folgenden Schritte aufweist: Bereitstellen einer Trägereinrichtung, die relativ zu einer zu bestimmenden Windkraftanlage räumlich verlagerbar ist; Anordnen einer optischen Aufnahmeeinrichtung auf der Trägereinrichtung, wobei die optische Aufnahmeeinrichtung eingerichtet ist, mittels eines optischen bildgebenden Verfahrens optische Bilder der Windkraftanlage aufzunehmen; Anordnen einer nichtoptischen Aufnahmeeinrichtung auf der Trägereinrichtung, wobei die nichtoptische Aufnahmeeinrichtung eingerichtet ist, mittels eines nichtoptischen bildgebenden Verfahrens nichtoptische Bilder der Windkraftanlage aufzunehmen; Anordnen einer Entfernungsmesseinrichtung auf der Trägereinrichtung und Verlagern der Trägereinrichtung relativ zur Windkraftanlage, derart, dass die Trägereinrichtung in mehrere verschiedene Relativpositionen in Bezug zur Windlcraftanlage verlagert wird. Weiterhin ist eine Vorrichtung zum bildgebenden Bestimmen einer Windkraftanlage offenbart (Fig. 1).

## Beschreibung

Die Erfindung betrifft ein Verfahren und eine Vorrichtung zum bildgebenden Bestimmen einer Windkraftanlage.

### Hintergrund

Es wurde vorgeschlagen, optische Aufnahmen an Rotorblättern von Windkraftanlagen für die Zustandsbewertung heranzuziehen. Je detailreicher diese Aufnahmen sind, desto besser lassen sich aus den Informationen zustandsbezogene Ableitungen treffen. Klassisch wird das Rotorblatt von einem geschulten Mitarbeiter durch Seilzugangstechnik begangen und untersucht. Sind Auffälligkeiten vorhanden, werden diese "aus der Nähe" direkt fotografiert und in einem Protokoll wiedergegeben. Digitale Verfahren sollen die gesamte Oberfläche des Rotorblattes "abscannen" und mindestens optische Bilder der gesamten Rotorblattoberfläche erzeugen.

In dem Dokument DE 10 2011 118 833 B3 wurde vorgeschlagen, zum Überprüfen des baulichen Zustands von Windkraftanlagen in Form von mehreren Rotorblätter aufweisenden Windrädern thermografische Aufnahmen zu erzeugen und auszuwerten. Auch das Dokument DE 10 2013 110 898 A1 betrifft ein Verfahren zum Auswerten thermografisch erhobener Daten zum Zustand von Rotorblättern an den Windkraftanlagen in Betrieb. Alternativ wurde vorgeschlagen, optische Abbildungen von Elementen von Windkraftanlagen, insbesondere der Rotorblätter, mittels einer Kamera aufzunehmen.

### Zusammenfassung

Aufgabe der Erfindung ist es, verbesserte Technologien zum bildgebenden Bestimmen einer Windkraftanlage anzugeben, die eine optimierte Messwerterfassung unterstützt.

Die Aufgabe wird gelöst durch ein Verfahren und eine Vorrichtung zum bildgebenden Bestimmen einer Windkraftanlage nach den unabhängigen Ansprüchen 1 und 10. Alternative Ausgestaltungen sind Gegenstand von abhängigen Unteransprüchen.

Nach einem Aspekt ist ein Verfahren zum bildgebenden Bestimmen einer Windkraftanlage geschaffen. Bei dem Verfahren wird eine Trägereinrichtung bereitgestellt, die relativ zu einer zu bestimmenden Windkraftanlage räumlich verlagerbar ist. Auf der Trägereinrichtung wird eine optische Aufnahmeeinrichtung angeordnet, die eingerichtet ist, mittels eines optischen bildgebenden Verfahrens optische Bilder der Windkraftanlage aufzunehmen. Auf der Trägereinrichtung wird weiterhin eine nichtoptische Aufnahmeeinrichtung angeordnet, die eingerichtet ist, mittels eines nichtoptischen bildgebenden Verfahrens nichtoptische Bilder der Windkraftanlage aufzunehmen. Weiterhin ist auf der Trägereinrichtung eine Entfernungsmesseinrichtung angeordnet. Bei dem Verfahren wird die Trägereinrichtung relativ zur Windkraftanlage verlagert, derart, dass die Trägereinrichtung in mehrere verschiedene Relativpositionen in Bezug zur Windkraftanlage verlagert wird, insbesondere in Bezug zu einem oder mehreren Rotorblättern. Hierbei werden wiederholt die folgenden Schritte ausgeführt. Es wird ein momentaner Abstand zu einem Messabschnitt an der Windkraftanlage mittels der Entfernungsmesseinrichtung bestimmt. Mittels einer Steuereinrichtung, die mit der Entfernungsmesseinrichtung sowie der optischen und der nichtoptischen Aufnahmeeinrichtung verbunden ist, wird eine dem momentan Abstand zugeordnete jeweilige Fokuseinstellung für die optische und nichtoptische Aufnahmeeinrichtung bestimmt. Für die optische und die nichtoptische Aufnalmneeinrichtung wird die jeweilige Fokuseinstellung eingestellt. Mittels der optischen und der nichtoptischen Aufnahmeeinrichtung wird die Windkraftanlage aufgenommen, derart, dass jeweils einander zugeordnete optische und nichtoptische Bilder erzeugt werden, die einen überlappenden Bildbereich aufweisen, in welchem das optische und das nichtoptische Bild voneinander zu geordneten Bildern den selben zu bestimmenden Abschnitt der Windkraftanlage zeigen, wobei der Messabschnitt in dem überlappenden Bildbereich liegt.

Nach einem weiteren Aspekt ist eine Vorrichtung zum bildgebenden Bestimmen einer Windkraftanlage geschaffen. Die Vorrichtung weist eine Trägereinrichtung auf, die relativ zu einer zu bestimmenden Windkraftanlage räumlich verlagerbar ist. Weiterhin sind bei der Vorrichtung eine optische und eine nichtoptische Aufnahmeeinrichtung sowie eine Entfernungsmesseinrichtung vorgesehen. Die optische Aufnahmeeinrichtung ist auf der Trägereinrichtung angeordnet und eingerichtet, mittels eines optischen bildgebenden Verfahrens optische Bilder der Windkraftanlage aufzunehmen. Die nichtoptische Aufnahmeeinrichtung ist auf der Trägereinrichtung angeordnet und eingerichtet, mittels eines nichtoptischen bildgebenden Verfahrens nichtoptische Bilder der Windkraftanlage aufzunehmen. Die Trägereinrichtung ist relativ zur Windkraftanlage verlagerbar, derart, dass die Trägereinrichtung in mehrere verschiedene Relativpositionen in Bezug zur Windkraftanlage verlagert werden kann. Hierbei werden wiederholt die nachfolgenden Schritte ausgeführt. Es wird ein momentaner Abstand zu einem Messabschnitt an der Windkraftanlage mittels der Entfernungsnnesseinrichtung bestimmt. Mittels einer Steuereinrichtung, die mit der Entfernungsmesseinrichtung sowie der optischen und der nichtoptischen Aufnahmeeinrichtung verbunden ist, wird eine dem momentan Abstand zugeordnete jeweilige Fokuseinstellung für die optische und nichtoptische Aufnahmeeinrichtung bestimmt. Für die optische und die nichtoptische Aufnahmeeinrichtung wird die jeweilige Fokuseinstellung eingestellt. Mittels der optischen und der nichtoptischen Aufnahmeeinrichtung wird die Windkraftanlage aufgenommen, derart, dass jeweils einander zugeordnete optische und nichtoptische Bilder erzeugt werden, die einen überlappenden Bildbereich aufweisen, in welchem das optische und das nichtoptische Bild voneinander zu geordneten Bildern den selben zu bestimmenden Abschnitt der Windkraftanlage zeigen, wobei der Messabschnitt in dem überlappenden Bildbereich liegt.

Mithilfe der Trägereinrichtung werden die optische und die nichtoptische Aufnahmeeinrichtung wie auch die Entfernungsmesseinrichtung in verschiedene Relativpositionen zur Windkraftanlage verlagert, insbesondere zum Bestimmen eines oder mehrerer Rotorblätter der Windkraftanlage. In den verschiedenen Relativpositionen werden mit der optischen und der nichtoptischen Aufnahmeeinrichtung jeweils einander zugeordnete Bilder aufgenommen, insbesondere zeitgleich, wobei die Bildaufnahme für die Aufnahmeeinrichtung mittels eines gemeinsamen oder zeitgleichen getrennten Triggerimpulsen ausgelöst werden kann.

Die optische und die nichtoptische Aufnahmeeinrichtung werden zuvor in eine jeweilige Fokuseinstellung gebracht, beispielsweise dadurch, dass ein jeweiliges Objektiv entsprechend eingestellt wird, wobei die Fokuseinstellung ausgehend von der Entfernungsmessung bestimmt wird. Hierbei kann einander zugeordnete Werte für den momentanen Abstand (Entfernung) einerseits und eine jeweilige Fokuseinstellung andererseits zurückgegriffen werden, die beispielsweise in einem elektronischen Speicher der Vorrichtung hinterlegt sind, auf den die Steuereinrichtung zugreifen kann. Die Zuordnung kann beispielsweise in einer Look-up-Tabelle gespeichert sein. Auf diese Weise ist eine automatisierte Fokuseinstellung unter Verwendung einer aktiven Entfernungsmessung ermöglicht, die in jeder Relativposition der Trägereinrichtung zu der Windkraftanlage eine optimierte Aufnahme der optischen und der nichtoptischen Bilder ermöglicht. Es kann vorgesehen sein, dass der Messabschnitt, für den der momentane Abstand mittels der Entfernungsmesseinrichtung bestimmt wird, im Wesentlichen im Zentrum des überlappenden Bildbereichs des optischen und des nichtoptischen Bildes angeordnet ist.

An das Aufnehmen der einander zugeordneten optischen und nichtoptischen Bilder kann sich eine digitale Bildauswertung anschließen, die zumindest teilweise in der Steuereinrichtung durchgeführt werden kann. Alternativ oder ergänzend ist die Übertragung der aufgenommenen Bilder, die beispielsweise als Digitalbilder aufgenommen werden, an eine Datenverarbeitungseinrichtung möglich, um dort die Bildauswertung ergänzend oder ausschließlich auszuführen, um zum Beispiel Materialfehlstellen an den aufgenommenen Abschnitten der Windkraftanlage zu bestimmen.

Als Trägereinrichtung kann ein Flugobjekt bereitgestellt werden, welches beim Aufnehmen der optischen und der nichtoptischen Bilder mittels Flugbewegungen relativ zur Windkraftanlage bewegt wird. Alternativ kann die Trägereinrichtung an einem Standgerät bewegbar aufgenommen sein, beispielsweise in Form einer verfahrbaren Arbeitsbühne, die relativ zur Windkraftanlage räumlich verlagerbar ist.

Das Einstellen der jeweiligen Fokuseinstellung kann für die optische und / oder die nichtoptische Aufnahmeeinrichtung ein Steuern der Flugbewegungen des Flugobjekts umfassen, derart, dass hierdurch der Abstand zu dem zu bestimmenden Abschnitt der Windkraftanlage eingestellt wird. Bei dieser Ausgestaltung wird die Flugbewegung des Flugobjekts, welches die Trägereinrichtung aufnimmt, in Abhängigkeit von der Entfernungsmessung gesteuert, um die optische und / oder die nichtoptische Aufnahmeeinrichtung relativ zur Windkraftanlage in eine Stellung zu bringen, die eine gewünschte Fokuseinstellung für die jeweilige Aufnahmeeinrichtung gewährleistet. Das Steuern der Flugbewegung kann zum Einstellen einer Fokusstellung ausschließlich oder in Kombination mit dem Einstellen des Fokus in der jeweiligen Aufnahmeeinrichtung, insbesondere mittels Verstellen eines Objektivs, angewendet werden. So kann vorgesehen sein, die Einstellung der optischen und / oder der nichtoptischen Aufnahmeeinrichtung hinsichtlich des Fokus festzuhalten und den Abstand der Aufnahmeeinrichtungen zu dem zu bestimmenden Abschnitt der Windkraftanlage in Abhängigkeit vom Ergebnis der Entfernungsmessung mittels der Flugbewegung zu steuern. Alternativ kann vorgesehen sein, mithilfe der Flugbewegung eine Grobsteuerung vorzunehmen und eine Feinabstimmung der gewünschten Fokuseinstellung mittels Einstellen der optischen und / oder der nichtoptischen Aufnahmeeinrichtung vorzunehmen, beispielsweise mittels einer jeweiligen Objektiwerstellung.

Das Einstellen der jeweiligen Fokuseinstellung für die optische und / oder die nichtoptische Aufnahmeeinrichtung kann ein Steuern zugeordneter Fokuseinstelleinrichtungen umfassen. Das Einstellen der jeweiligen Fokuseinstellung mittels Steuern der zugeordneten Fokuseinstelleinrichtung in der optischen und / oder der nichtoptischen Aufnahmeeinrichtung kann ausschließlich oder ergänzend zum Steuern der Flugbewegung vorgesehen sein. Die zugeordnete Fokuseinstelleinrichtung kann zum Beispiel einen Schrittmotor aufweisen. Zum Einstellen der gewünschten Fokuseinstellung kann dieser von der Steuereinrichtung mit entsprechenden Steuersignalen angesteuert werden.

Auf der Trägereinrichtung kann eine Höhenmesseinrichtung angeordnet sein, die mit der Steuereinrichtung verbunden ist. Mittels der Höhenmesseinrichtung kann eine dem momentanen Abstand zugeordnete momentane Höhe bestimmt werden. Die Höhenmesseinrichtung kann genutzt werden, um die räumliche Lage der Trägereinrichtung weiter zu bestimmen, insbesondere relativ zur Wirtdkraftanlage. Es kann vorgesehen sein, dass das Ergebnis der Höhenmessung den Auslösezeitpunkt für die optische und / oder die nichtoptische Aufnahmeeinrichtung triggert, beispielsweise derart, dass ein optisches und / oder ein nichtoptisches Bild beim Erreichen einer vorgegebenen Höhe über dem Erdboden aufgenommen werden.

Die Steuereinrichtung kann für die momentane Höhe eine korrigierte Fokuseinstellung bestimmen, wenn die momentane Höhe einer Höhe entspricht, für welche eine korrigierte Fokuseinstellung anzuwenden ist. Sind in der Steuereinrichtung beispielsweise elektronische Informationen zur äußeren Oberflächenkontur eines Abschnitts der Windkraftanlagen in bestimmten Höhen über den Erdboden hinterlegt, können diese eine korrigierte Fokuseinstellung bewirken, dahingehend, dass nicht die Fokuseinstellung eingestellt wird, die dem tatsächlich aktuell gemessenen Abstand zugeordnet ist, sondern eine Fokuseinstellung für einen hiervon abweichenden Abstandswert, um so der konkreten Oberflächenkontur im Bereich der momentanen Höhe Rechnung zu tragen.

Die Fokuseinstellung und / oder die korrigierte Fokuseinstellung kann ausgewählt werden, eine Tiefenschärfe der optischen und / oder der nichtoptischen Aufnahmeeinrichtung für das Aufnehmen des zu bestimmenden Abschnitts der Windkraftanlage optimiert zu ausnutzen. Beispielsweise können so nicht ebene Oberflächenabschnitte oder ebene aber geneigte Oberflächenabschnitte der Windkraftanlage verbessert bildgebend aufgenommen werden.

Die optische und / oder die nichtoptische Aufnahmeeinrichtung kann ein Zoomobjektiv aufweisen und dass beim Bestimmen der Fokuseinstellung mittels der Steuereinrichtung eine Zoomeinstellung für das Zoomobjektiv bestimmt und hiervon ausgehend auf eine hierzu nächstgelegene Fokuseinstellung interpoliert wird. Mittels Zoomen wird die Brennweite eines jeweiligen Objektivs der Aufnahmeeinrichtungen verändert. Bei dieser Ausführungsform ist die elektronische Steuerinformation betreffend die Zuordnung zwischen Abstandswerten und Fokuseinstellung ergänzt um eine Zuordnung von Zoomeinstellungen, die es ermöglichen, für eine vorhandene Zoomeinstellung eine zugeordnete Fokuseinstellung mittels Interpolieren zu Bestimmen.

Die nichtoptische Aufnahmeeinrichtung kann wenigstens eine der folgenden Aufnahmeeinrichtungen aufweisen: eine Thermografie-Aufnahmeeinrichtung aufweist, die eingerichtet ist, die nichtoptischen Bilder als Thermografiebilder aufzunehmen; Ultraschall-Aufnahmeeinrichtung, die eingerichtet ist, die nichtoptischen Bilder als Ultraschallbilder aufzunehmen; und Röntgenstrahl-Aufnahmeeinrichtung, die eingerichtet ist, die nichtoptischen Bilder als Röntgenbilder aufzunehmen.

In Verbindung mit der Vorrichtung zum bildgebenden Bestimmen einer Windkraftanlage können die vorangehend im Zusammenhang mit dem Verfahren erläuterten Ausgestaltungen entsprechend vorgesehen sein.

### Beschreibung von Ausführungsbeispielen

Nachfolgend werden weitere Ausführungsbeispiele unter Bezugnahme auf eine Figur näher erläutert.

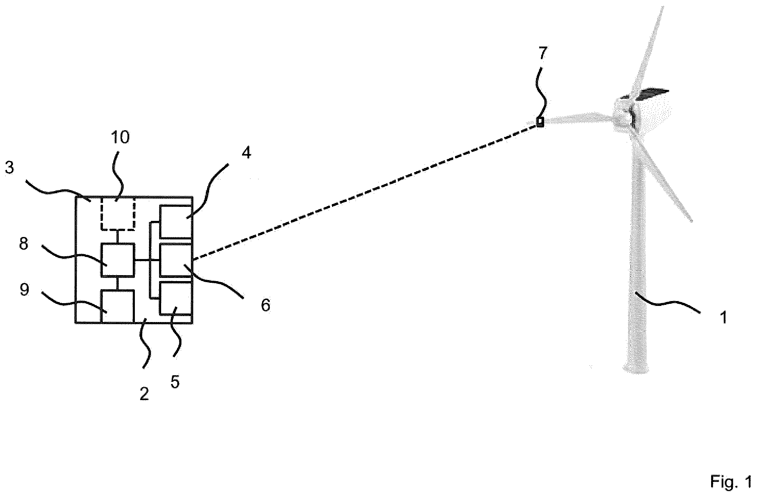

Die einzige Figur zeigt eine schematische Darstellung einer Anordnung mit einer zu bestimmenden Windkraftanlage und einer Vorrichtung 2 zum bildgebenden Bestimmen der Windkraftanlage 1.

Die Vorrichtung 2 weist eine Trägereinrichtung 3 auf, die eingerichtet ist, relativ zur Windkraftanlage 1 in verschiedene Positionen oder Stellungen verlagert zu werden. Auf der Trägereinrichtung 3 sind eine optische Aufnahmeeinrichtung 4 sowie eine nichtoptische Aufnahmeeinrichtung 5 angeordnet, die eingerichtet sind, von der Windkraftanlage 1 optische und nichtoptische Bilder aufzunehmen. Weiterhin ist auf der Trägereinrichtung 2 eine Entfernungsmesseinrichtung 6 angeordnet, die dazu dient, in den verschiedenen Relativpositionen der Trägereinrichtung 3 zur Windkraftanlage 1 einen momentanen Abstand zu einem der Trägereinrichtung 3 gegenüberliegenden Messabschnitt 7 an der Windkraftanlage 1 zu bestimmen, beispielsweise mittels einer Laser-Entfernungsmesseinrichtung oder einer Entfernungsmesseinrichtung auf Basis von Radar-Sensoren.

Die Vorrichtung 2 weist weiterhin eine Steuereinrichtung 8 auf, die an die optische und die nichtoptische Aufnahmeeinrichtung 4, 5 sowie an die Entfernungsmesseinrichtung 6 koppelt, derart, dass jeweils elektronische Daten übertragen werden können. Mithilfe der Steuereinrichtung 8 werden die Messergebnisse der Entfernungsmessung ausgewertet, derart, dass zugeordnete Fokuseinstellungen für die optische und die nichtoptische Aufnahmeeinrichtung 4, 5 bestimmt werden. In Abhängigkeit von dem gemessenen momentanen Abstand zum Messabschnitt 7 der Windkraftanlage 1 wird für die optische und die nichtoptische Aufnahmeeinrichtung 4, 5 eine jeweilige Fokuseinstellung bestimmt.

Nach dem Bestimmen der Fokuseinstellung wird diese für die optische und die nichtoptische Aufnahmeeinrichtung 4, 5 eingestellt, um hierauf einander zugeordnete optische und nichtoptische Bilder aufzunehmen, die den Messabschnitt 7 umfassen. Das Einstellen der Fokuseinstellung kann mittels Steuern der Flugbewegung der Trägereinrichtung 3 ausgeführt werden, wenn dieser auf einem Flugobjekt angeordnet ist, beispielsweise einem Helikopter oder einer Drohne. Die Steuereinrichtung 8 gibt hierzu entsprechende Steuersignale an die Steuerung der Flugbewegung des Flugobjekts. Alternativ oder ergänzend kann vorgesehen sein, die Fokuseinstellung für die optische und die nichtoptische Aufnahmeeinrichtung 4, 5 mittels entsprechender Einstellung eines jeweils zugeordneten Objektivs vorzunehmen, beispielsweise dadurch, dass ein Schrittmotor angesteuert wird, der das jeweilige Objektiv der optischen und / oder der nichtoptischen Aufnahmeeinrichtung 4, 5 verlagert zur Fokuseinstellung.

Beim Bestimmen der jeweiligen Fokuseinstellung mittels der Steuereinrichtung 8 kann vorgesehen sein, dass aus einer Look-up-Tabelle ein dem momentanen Abstand zugeordneter Wert für die Fokuseinstellung bestimmt wird.

Bei der dargestellten Ausfuhrungsform ist weiterhin eine Höhenmesseinrichtung 9 auf der Trägereinrichtung 3 angeordnet, die eingerichtet ist, eine Höhe der Trägereinrichtung 3 über dem Erdboden zu bestimmen.

Auf der Trägereinrichtung 3 können ein oder mehrere weitere Funktionskomponenten 10 angeordnet sein.

Nachfolgend werden weitere Aspekte erläutert.

Die Verwirklichung des Verfahrens kann einen mehrdimensionalen Aufbau der elektronischen Zuordnung zwischen den Abstandswerten und den für die Fokuseinstellung relevanten Parametern, zum Beispiel in Form der Look-up-Tabelle, vorsehen. Die Einstellung von Kameramotoren der optischen und / oder der nichtoptischen Aufnahmeeinrichtung 4, 5 kann eine Programmierbarkeit der einzelnen Optiken und / oder externer Stelleinrichtungen vorsehen, um Fokus oder / und Zoom an der Optik zu verstellen.

Werden in der optischen und / oder der nichtoptischen Aufnahmeeinrichtung 4, 5 Zoom-Objektive genutzt, kann die grundlegende Kalibriertabelle (elektronische Zuordnung) noch um eine Ebene erweitert werden, nämlich Zoomstufe. Es wird zuerst die aktuelle Zoomstufe ausgelesen und darauf in der Tabelle der nächstliegende Wert für die Einstellung des Fokus ermittelt. Hier können mathematische Algorithmen oder auch einzelne - viele feine - Werte zur Verwendung kommen. Hier kann aus der Kamera selbst die Zoomstufe ausgelesen werden und anhand der Tabelle eine Interpolation zum nächstgelegenem Wert ermittelt werden. Die Interpolation ist abhängig von jedem Objektiv selbst und kann von linearer Interpolation bis hin zu komplexen Funktionen benötigen.

Es kann eine schnelle und stufenlose Verstellung des gemessenen Fokus mittels Näherung der Schritte bis zum nächsten Messwert ermöglicht sein. Algorithmen aus der Künstlichen Intelligenz können den Prozess durch - selbst lernende - Berechnung der Zwischenwerte unterstützen.

Es können zwei oder mehrere Aufnahmeeinrichtungen eingesetzt werden. Die Aufnahmeeinrichtungen sind zueinander kalibriert und nehmen etwa denselben Aufnahmebereich auf, zumindest das Zentrum der Kameras kann aufeinander abgeglichen sein. Dieses Zentrum stimmt auch mit dem Messpunkt der Abstands- oder Entfernungsmesseinrichtung überein.

Die Abstandsmessung kann kontinuierlich erfolgen und ermittelt annähernd in Echtzeit den Abstand zwischen Aufnahmeobjekt an der Windkraftanlage 1 und Kamera. Die Umstellung des Fokus erfolgt adäquat. Ändert sich der Zoom, kann dieser gleichzeitig berücksichtigt werden.

Neben der Abstandsmessung zum Messobjekt kann bei dem Verfahren auch die Höhe von Wert sein. Die Messung der Höhe kann mit geeigneten Messsystemen (Laser, Radar) gegen den Boden erfolgen und dadurch die Position im Raum besser bestimmen. Insbesondere für das Auslösen der Kameras der Aufnahmeeinrichtungen 4, 5 für jede einzelne Aufnahme ist hier über eine Messung zur Bodenreferenz oder mittels barometrischem Sensor ein Vorteil zu sehen.

Die optischen und die nichtoptischen Aufnahmen können aus einzelnen Bildern bestehen, welche über ein geeignetes Messsystem gegen eine Referenz oder Luftdruck ausgelöst werden, oder es kann ein Film in beliebiger Framerate gemeint sein.

Das Messsystem wird relative zur Windkraftanlage 1 positioniert, und der Fokus wird kontinuierlich nachgeregelt. Hier kann zusätzlich dem Piloten einer Drohne, eines Helikopter oder einer Befahranlage die Position der Abstand angesagt / angezeigt werden, und so die Position für den idealen Fokus mechanisch eingestellt werden. Auch eine automatische Regelung der Flugbewegung kann vorgesehen sein.

Die Abstandsmessung kann integraler Bestand der Fluglageregelung (Position der Kamera zum Messobjekt) werden. Hierbei kann die Information des Abstandes dazu verwendet werden entweder den Piloten zu führen (siehe oben) oder auch direkt auf elektronischem Wege der Fluglageregelung eingespeist werden um immer den idealen Abstand einzuhalten.

Es kann eine freie Positionierung und Einstellung des Fokus vorgesehen sein. Diese Betriebsart gibt dem Bediener des Messsystems die Freiheit, das Messsystem beliebig zum Messobjekt zu führen und jederzeit einen perfekten Fokus zu erhalten.

In der Look-up-Tabelle kann es noch einen zusätzlichen Parameter geben, welcher sich aus der Geometrie des Messabschnitts an der Windkraftanlage 1 ergibt. Das Messen auf der Wurzel des Rotorblatts erfordert zum Beispiel einen Offset des Fokus zum gemessenen Abstand, um eine Approximation für die Tiefenschärfe zu erhalten. Je weiter sich die Oberfläche des Messabschnitts 7 einer Ebene nähert, desto weiter wird der eingestellte Fokus dem real gemessenen Fokus angenähert. Hierzu kann eine Geometriedatenbank hinterlegt werden, auf die die Steuereinrichtung 8 zugreifen kann und die automatisch Offsetwerte für den Fokus des Messabschnitts, in Korrelation zur Position an der Windkraftanlage 1, annähert. Dies kann insbesondere für die Aufnahme an Rotorblättern sinnvoll sein. Wird der Fokus auf dem zylindrischem Objekt gemessen, kann über die bekannte Tiefenschärfe der jeweiligen Aufnahmeeinrichtung 4, 5 der Fokuspunkt - in das Objekt - gelegt werden, um den gesamten Bereich der Tiefenschärfe auszunutzen. Zum Beispiel kann der Wurzelbereich des Rotorblatts zylindrisch sein mit Durchmesser von 2m. Der Abstand wird mit 10m auf der Oberfläche des Zylinders gemessen. Hier ist es sinnvoll, den Fokus zum Beispiel auf 11m einzustellen. Somit ist der Zentrumsbereich der Messung immer noch scharf, und ein größerer Bereich des Messobjektes liegt im Bereich der Tiefenschärfe.

Sind die Kameraeinheiten nicht in der Lage, den Fokus motorisch anzupassen, ist durch die Abstandsmessung auch die Lageregelung der Kamera möglich. Hierzu kann zum Beispiel bei Fluggeräten wie Drohnen, Multikoptern, Helikoptern oder auch Arbeitsbühnen der direkte Eingriff in die Fluglageregelung vorgesehen sein. Exemplarisch kann die unbemannte Flugdrohne genannt werden, bei der durch geeigneten Eingriff in die Fluglageregelung die Drohne immer im konstanten Abstand zum Messobjekt geführt wird. Dies ist insbesondere bei Rotorblättern von Windkraftanlagen von Vorteil, da sich der Radius des Rotorblattes mehrfach ändert und sogar eine Vorbiegung des Rotorblattes dadurch berücksichtigt werden kann.

Die in der vorstehenden Beschreibung, den Ansprüchen sowie der Figur offenbarten Merkmale können sowohl einzeln als auch in beliebiger Kombination für die Verwirklichung der verschiedenen Ausführungsformen von Bedeutung sein.

## Patentansprüche

1. Verfahren zum bildgebenden Bestimmen einer Windkraftanlage, wobei das Verfahren die folgenden Schritte aufweist:
- Bereitstellen einer Trägereinrichtung, die relativ zu einer zu bestimmenden Windkraftanlage räumlich verlagerbar ist;
- Anordnen einer optischen Aufnahmeeinrichtung auf der Trägereinrichtung, wobei die optische Aufnahmeeinrichtung eingerichtet ist, mittels eines optischen bildgebenden Verfahrens optische Bilder der Windkraftanlage aufzunehmen;
- Anordnen einer nichtoptischen Aufnahmeeinrichtung auf der Trägereinrichtung, wobei die nichtoptische Aufnahmeeinrichtung eingerichtet ist, mittels eines nichtoptischen bildgebenden Verfahrens nichtoptische Bilder der Windkraftanlage aufzunehmen;
- Anordnen einer Entfernungsmesseinrichtung auf der Trägereinrichtung und
- Verlagern der Trägereinrichtung relativ zur Windkraftanlage, derart, dass die Trägereinrichtung in mehrere verschiedene Relativpositionen in Bezug zur Windkraftanlage verlagert wird, wobei hierbei wiederholt folgende Schritte ausgeführt werden:
- Bestimmen eines momentanen Abstands zu einem Messabschnitt an der Windkraftanlage mittels der Entfernungsmesseinrichtung;
- Bestimmen einer dem momentanen Abstand zugeordneten jeweiligen Fokuseinstellung für die optische und die nichtoptische Aufnahmeeinrichtung mittels einer Steuereinrichtung, die mit der Entfernungsmesseinrichtung sowie der optischen und der nichtoptischen Aufnahmeeinrichtung verbunden ist;
- Einstellen der jeweiligen Fokuseinstellung für die optische und die nichtoptische Aufnahmeeinrichtung und
- Aufnehmen der Windkraftanlage mittels der optischen und der nichtoptischen Aufnahmeeinrichtung, derart, dass jeweils einander zugeordnete optische und nichtoptische Bilder erzeugt werden, die einen überlappenden Bildbereich aufweisen, in welchem das optische und das nichtoptische Bild von einander zugeordneten Bildern denselben zu bestimmenden Abschnitt der Windkraftanlage zeigen, wobei der Messabschnitt in dem überlappenden Bildbereich liegt.

2. Verfahren nach Anspruch 1, **dadurch gekennzeichnet, dass** als Trägereinrichtung ein Flugobjekt bereitgestellt wird, welches beim Aufnehmen der optischen und der nichtoptischen Bilder mittels Flugbewegungen relativ zur Windkraftanlage bewegt wird.

3. Verfahren nach Anspruch 2, **dadurch gekennzeichnet, dass** das Einstellen der jeweiligen Fokuseinstellung für die optische und / oder die nichtoptische Aufnahmeeinrichtung ein Steuern der Flugbewegungen des Flugobjekts umfasst, derart, dass hierdurch der Abstand zu dem zu bestimmenden Abschnitt der Windkraftanlage eingestellt wird.

4. Verfahren nach mindestens einem der vorangehenden Ansprüche, **dadurch gekennzeichnet, dass** das Einstellen der jeweiligen Fokuseinstellung für die optische und / oder die nichtoptische Aufnahmeeinrichtung ein Steuern zugeordneter Fokuseinstelleinrichtungen umfasst.

5. Verfahren nach mindestens einem der vorangehenden Ansprüche, **dadurch gekennzeichnet, dass** eine Höhenmesseinrichtung auf der Trägereinrichtung angeordnet, die mit der Steuereinrichtung verbunden ist, und dass mittels der Höhenmesseinrichtung eine dem momentanen Abstand zugeordnete momentane Höhe bestimmt wird.

6. Verfahren nach Anspruch 5, **dadurch gekennzeichnet, dass** die Steuereinrichtung für die momentane Höhe eine korrigierte Fokuseinstellung bestimmt, wenn die momentane Höhe einer Höhe entspricht, für welche eine korrigierte Fokuseinstellung anzuwenden ist.

7. Verfahren nach mindestens einem der vorangehenden Ansprüche, **dadurch gekennzeichnet, dass** die Fokuseinstellung und / oder die korrigierte Fokuseinstellung ausgewählt werden, eine Tiefenschärfe der optischen und / oder der nichtoptischen Aufnahmeeinrichtung für das Aufnehmen des zu bestimmenden Abschnitts der Windkraftanlage optimiert zu ausnutzen.

8. Verfahren nach mindestens einem der vorangehenden Ansprüche, **dadurch gekennzeichnet, dass** die optische und / oder die nichtoptische Aufnahmeeinrichtung ein Zoomobjektiv aufweisen und dass beim Bestimmen der Fokuseinstellung mittels der Steuereinrichtung eine Zoomeinstellung für das Zoomobjektiv bestimmt und hiervon ausgehend auf eine hierzu nächstgelegene Fokuseinstellung interpoliert wird.

9. Verfahren nach mindestens einem der vorangehenden Ansprüche, **dadurch gekennzeichnet, dass** die nichtoptische Aufnahmeeinrichtung wenigstens eine der folgenden Aufnahmeeinrichtungen aufweist:
- eine Thermografie-Aufnahmeeinrichtung aufweist, die eingerichtet ist, die nichtoptischen Bilder als Thermografiebilder aufzunehmen;
- Ultraschall-Aufnahmeeinrichtung, die eingerichtet ist, die nichtoptischen Bilder als Ultraschallbilder aufzunehmen; und
- Röntgenstrahl-Aufnahmeeinrichtung, die eingerichtet ist, die nichtoptischen Bilder als Röntgenbilder aufzunehmen.

10. Vorrichtung zum bildgebenden Bestimmen einer Windkraftanlage, mit:
- einer Trägereinrichtung, die relativ zu einer zu bestimmenden Windkraftanlage räumlich verlagerbar ist;
- einer optischen Aufnahmeeinrichtung, die auf der Trägereinrichtung angeordnet und eingerichtet ist, mittels eines optischen bildgebenden Verfahrens optische Bilder der Windkraftanlage aufzunehmen;
- einer nichtoptischen Aufnahmeeinrichtung, die auf der Trägereinrichtung angeordnet und eingerichtet ist, mittels eines nichtoptischen bildgebenden Verfahrens nichtoptische Bilder der Windkraftanlage aufzunehmen; und
- einer Entfernungsmesseinrichtung, die auf der Trägereinrichtung angeordnet ist;
wobei die Trägereinrichtung ist relativ zur Windkraftanlage verlagerbar, derart, dass die Trägereinrichtung in mehrere verschiedene Relativpositionen in Bezug zur Windkraftanlage verlagert werden kann, wobei hierbei wiederholt folgende Schritte ausgeführt werden:
- Bestimmen eines momentanen Abstands zu einem Messabschnitt an der Windkraftanlage mittels der Entfernungsmesseinrichtung;
- Bestimmen einer dem momentanen Abstand zugeordneten jeweiligen Fokuseinstellung für die optische und die nichtoptische Aufnahmeeinrichtung mittels einer Steuereinrichtung, die mit der Entfernungsmesseinrichtung sowie der optischen und der nichtoptischen Aufnahmeeinrichtung verbunden ist;
- Einstellen der jeweiligen Fokuseinstellung für die optische und die nichtoptische Aufnahmeeinrichtung und
- Aufnehmen der Windkraftanlage mittels der optischen und der nichtoptischen Aufnahmeeinrichtung, derart, dass jeweils einander zugeordnete optische und nichtoptische Bilder erzeugt werden, die einen überlappenden Bildbereich aufweisen, in welchem das optische und das nichtoptische Bild von einander zugeordneten Bildern denselben zu bestimmenden Abschnitt der Windkraftanlage zeigen, wobei der Messabschnitt in dem überlappenden Bildbereich liegt.
